# EUROPÄISCHE PATENTSCHRIFT

(11) **EP 3 442 674 B1**
(45) Veröffentlichungstag und Bekanntmachung des Hinweises auf die Patenterteilung: **09.06.2021**
(21) Anmeldenummer: 17717682.3
(22) Anmeldetag: 12.04.2017
(51) Int. Cl.: A63B 21/00, A63B 21/02, A63B 23/02, A63B 23/12, A63B 21/04, A63B 21/045, A63B 21/05, A63B 23/035, A63B 23/04, A63B 23/16

(54) **MUSKELTRAINER UND VERFAHREN ZU DESSEN HERSTELLUNG**
MUSCLE TRAINER AND METHOD FOR ITS PRODUCTION
DISPOSITIF D'ENTRAINEMENT DE LA MUSCULATURE ET SON PROCEDE DE FABRICATION

(30) Priorität: 15.04.2016 EP 16165512; 12.09.2016 EP 16188354
(43) Veröffentlichungstag der Anmeldung: 20.02.2019
(73) Patentinhaber: BASF SE, 67056 Ludwigshafen am Rhein (DE)
(72) Erfinder: ENDEMANN, Ulrich, 67056 Ludwigshafen am Rhein (DE); ENDEMANN, Moritz, 67278 Bockenheim (DE)
(86) Internationale Anmeldenummer: PCT/EP2017/058789
(87) Internationale Veröffentlichungsnummer: WO 2017/178533

(56) Entgegenhaltungen:
- FR-A3- 2 961 708
- KR-A- 20130 012 427
- US-A- 3 219 342
- US-A- 3 377 722
- US-A- 5 292 295
- US-A1- 2003 228 962
- US-A1- 2013 157 817

## Beschreibung

Die Erfindung betrifft einen Muskeltrainer mit zwei Federelementen sowie ein Verfahren zu dessen Herstellung.

Im Stand der Technik sind verschiedenartige Muskeltrainer zum Aufbau von Muskeln bekannt. Handtrainer beispielsweise werden zur Stärkung der Handmuskulatur verwendet. Hierbei wird vom Verwender eine Kraft auf den Handtrainer ausgeübt, wobei der Handtrainer über ein elastisches Element eine Gegenkraft erzeugt. Übliche Handtrainer verwenden als elastisches Element eine Feder aus einem Metall. Derartige Handtrainer müssen mit geeigneten Griffen versehen werden, was deren Gestaltung und Herstellung aufwändig macht. Die Griffe bestehen in der Regel aus unterschiedlichen Materialien, beispielsweise aus einem Kunststoff. Bei der Betätigung eines solchen Handtrainers durch den Verwender werden die Griffe bei Belastung aufeinander zu bewegt und bei Entlastung federn sie wieder in die Ausgangsposition zurück.

Aus der Gebrauchsmusterschrift DE 20 2014 009 325 U1 ist ein Handtrainer bekannt, der aus einem relativ biegesteifen Flächenelement und einem elastischen Element besteht, wobei das elastische Element eine Aufnahme für den Daumen aufweist und das biegesteife Flächenelement weitere Fingeraufnahmen aufweist. Die Finger außer dem Daumen werden hierdurch in eine feste Position relativ zum Daumen gebracht. Das Trainingsgerät erlaubt dadurch ein gezieltes Training der Daumenmuskulatur. Weitere Teile der Handmuskulatur lassen sich nicht trainieren.

In der Offenlegungsschrift DE 10 2012 108 655 A1 wird ein Fitnessgerät mit elastischen Elementen beschrieben, wobei die elastischen Elemente Polyurethan aufweisen. Mehrere elastische Elemente können in dem Fitnessgerät miteinander verbunden werden, wodurch sich ein entsprechend steiferes elastisches Element ergibt. Diese Verbindung erfordert jedoch einen festen Verbund, der relativ viel Platz in Anspruch nimmt. Des Weiteren treten an der Verbindung bei Belastung hohe Werkstoffbeanspruchungen auf.

Aus KR 2013 0012427 A ist ein Trainingsgerät zum Trainieren der Beckenmuskulatur bekannt, welches ein Paar von gebogenen Gliedern umfasst, die einander zuweisend angeordnet sind. Die beiden gebogenen Glieder sind über Gelenke drehbar an ihren Enden verbunden. In der Mitte der gebogenen Glieder sind an der Außenseite Knieauflagen montiert.

Eine Aufgabe der Erfindung ist einen Muskeltrainer bereitzustellen, der eine kompakte Bauform aufweist und einfach herzustellen ist. Des Weiteren ist es eine Aufgabe der Erfindung, die in einem Muskeltrainer bei Betätigung auftretende Werkstoffbeanspruchung möglichst gering zu halten. Hierbei sollen bevorzugt die zur Betätigung benötigte Kraft sowie die dabei erfolgende Verformung mit üblichen Muskeltrainern vergleichbar sein.

Es wird ein Muskeltrainer gemäß den Merkmalen des Anspruchs 1 vorgeschlagen. Der Muskeltrainer umfasst ein erstes und ein zweites gekrümmtes, längliches Federelement, wobei die beiden Federelemente mit ihren konkaven Seiten einander zugewandt angeordnet sind, an ihren jeweiligen Endbereichen Gelenkelemente aufweisen und über aus den Gelenkelementen gebildete Gelenke an ihren beiden Endbereichen miteinander verbunden sind.

Die Form der beiden Federelemente kann beispielsweise als eine im Wesentlichen rechteckige Platte ausgestaltet sein, wobei die rechteckige Platte eine lange Seite und eine kürzere Seite aufweist. Die Endbereiche sind dabei an den Enden der langen Seite angeordnet. Die rechteckige Platte ist gekrümmt, wobei die Krümmungsachse parallel zu der kurzen Seite und senkrecht zur langen Seite verläuft. Unter Vernachlässigung der Krümmung des Federelements wird die Richtung parallel zur kurzen Seite als Querrichtung angesehen, die Richtung parallel zur langen Seite wird als Längsrichtung angesehen und die Richtung senkrecht zur Fläche der Platte wird als Vertikalrichtung angesehen. Diese Form der Federelemente kann auch als senkrechtes Zylindersegment beschrieben werden, wobei die Grundfläche des senkrechten Zylindersegments im Wesentlichen sichelförmig ausgestaltet ist. Die Richtung parallel zu der Verbindung der beiden Enden der Sichelform wird als Längsrichtung bezeichnet und die Richtung senkrecht zur Grundfläche des Zylinders wird als Querrichtung bezeichnet. Die Vertikalrichtung ist sowohl zur Längsrichtung als auch zur Querrichtung senkrecht. Die beiden Endbereiche eines Federelements sind bei dieser Beschreibung der Form an den Enden der Sichelform angeordnet.

In einer Ausführungsform besteht der Muskeltrainer aus zwei solchen länglichen gekrümmten Federelementen, die im Muskeltrainer derart zueinander angeordnet sind, dass deren konkaven Seiten einander zugewandt sind. Die beiden Federelemente sind an ihren Enden über Gelenke miteinander verbunden.

Jedes der Federelemente weist an seinen beiden Endbereichen jeweils ein Gelenkelement auf, wobei jeweils ein Gelenkelement des ersten Federelements zusammen mit einem entsprechenden Gelenkelement des zweiten Federelements ein Gelenk ausbildet. Die so gebildeten zwei Gelenke verbinden die beiden Federelemente derart, dass bei einer Betätigung des Muskeltrainers mit einer Krafteinwirkung parallel zur vertikalen Richtung die Verbindungen zwischen den beiden Federelementen in vorteilhafter Weise nicht oder nur gering biegebelastet und biegebeansprucht werden. Die größte Biegebelastung wird auf den Teil des Federelements aufgebracht, der in der Mitte zwischen den beiden Endbereichen liegt. Mit dem Begriff Biegebeanspruchung ist die mechanische Spannung im Werkstoff gemeint. Bevorzugt wird das Federelement derart ausgestaltet, dass die Biegebeanspruchung über die Länge des Federelements annähernd konstant gehalten wird. Mit dem Begriff Biegebelastung wird das Biegemoment bezeichnet, welches von der Mitte des Federelements zum Rand hin abnimmt.

Bei einer Betätigung des Muskeltrainers wird durch die Federelemente eine Gegenkraft erzeugt, gegen die ein Nutzer des Muskeltrainers arbeiten muss. Die Größe der Gegenkraft wird dabei durch die Gestaltung der Federelemente und durch den verwendeten Werkstoff bestimmt und richtet sich nach den mit dem Muskeltrainer zu trainierenden Muskeln. Bevorzugt ist der Muskeltrainer als Handtrainer ausgestaltet.

Bevorzugt variiert die Wanddicke eines Federelements in Längsrichtung gesehen, also über die Strecke von einem Ende zum anderen Ende, wobei die größte Wanddicke bevorzugt in der Mitte erreicht wird. Die größte Wanddicke liegt bevorzugt im Bereich von 2 bis 8 mm und besonders bevorzugt im Bereich von 3 bis 6 mm. Die kleinste Wanddicke liegt bevorzugt im Bereich von 0,5 bis 5 mm und besonders bevorzugt im Bereich von 1 bis 3 mm. Durch die Variation der Wanddicke kann das Federelement in den Bereichen am stärksten ausgeführt werden, in denen die größten Biegebelastungen auftreten.

Alternativ oder zusätzlich kann die Breite des Federelements, also die Länge der kurzen Seite, in Längsrichtung gesehen variieren. Bevorzugt weist das Federelement seine größte Breite in der Mitte auf. Die größte Breite liegt -je nach Anwendungszweck - bevorzugt im Bereich von 20 mm bis 150 mm. Bei der Anwendung als Handtrainer liegt die größte Breite bevorzugt im Bereich von 20 mm bis 50 mm und besonders bevorzugt im Bereich 25 mm bis 35 mm. Die kleinste Breite liegt bevorzugt im Bereich von 5 mm bis 100 mm. Bei der Anwendung als Handtrainer liegt die kleinste Breite bevorzugt im Bereich von 5 mm bis 25 mm und besonders bevorzugt im Bereich von 10 mm bis 20 mm. Erfolgt keine Variation der Breite, so ist die Breite der Federelemente bevorzugt im Bereich von 20 mm bis 150 mm gewählt, bei der Anwendung als Handtrainer bevorzugt im Bereich von 20 mm bis 50 mm. Bevorzugt weisen das erste und das zweite Federelement die gleiche Breite bzw. den gleichen Verlauf der Breite auf.

Die Länge der Federelemente, also die Ausdehnung in Längsrichtung, liegt bevorzugt im Bereich von 150 mm bis 350 mm, bei der Anwendung als Handtrainer besonders bevorzugt im Bereich von 180 mm bis 230 mm.

Der Muskeltrainer wird bevorzugt derart betätigt, dass eine Krafteinwirkung im Bereich der Mitte der Flächen der Federelemente erfolgt. Hierzu ist es bevorzugt, an den Federelementen jeweils einen Krafteinleitungsbereich auszubilden, damit der Muskeltrainer durch den Verwender leichter zu verwenden oder zu greifen ist. Im Fall der Ausgestaltung des Muskeltrainers als Handtrainer werden die Krafteinleitungsbereiche bevorzugt als Griffbereiche ausgestaltet.

Die maximale Federkraft des Muskeltrainers wird über die Wahl der Geometrie der Federelemente und die Wahl des Materials der Federelemente eingestellt und liegt bevorzugt im Bereich von 40 bis 300 N und besonders bevorzugt im Bereich von 50 bis 100 N. Die maximale Federkraft wird erreicht, wenn durch Krafteinwirkung die Federelemente derart verformt werden, dass die Federelemente sich im Bereich der Mitte der Flächen der Federelemente berühren. In diesem Zustand ist durch die Verformung die Krümmung der Federelemente im Wesentlichen aufgehoben. Die bei einer Betätigung des Muskeltrainers maximal mögliche Verformung ist durch den größten Abstand zwischen den beiden Federelementen definiert und wird über die Krümmung der Federelemente vorgegeben. Der größte Abstand zwischen den beiden Federelementen liegt bevorzugt im Bereich von 20 mm bis 200 mm, bei der Anwendung als Handtrainer besonders bevorzugt im Bereich von 50 bis 100 mm. Die maximale Federkraft und die maximale Federverformung können auch (z. B. um bei der Anwendung als Handtrainer eine komfortablere Bedienung zu erreichen) durch zwischen den Krafteinleitungsbereichen der beiden Federelemente eingebrachte Anschläge begrenzt werden. In diesem Fall wird die Krümmung der Federelemente auch bei Aufbringen der maximalen Federkraft nicht ganz aufgehoben.

Die Gelenkelemente des ersten Federelements sind als Laschen ausgebildet, wobei die Laschen in Richtung der konkaven Seite des ersten Federelements gebogen sind und die Gelenkelemente des zweiten Federelements teilweise umschließen.

Die Laschen weisen in dem Bereich, der an das Federelement angrenzt, einen im Vergleich zur Krümmung des Federelements kleinen Biegeradius auf und laufen in einen nicht oder nur gering gekrümmten Bereich aus. Der Bereich mit dem kleinen Biegeradius bildet dabei ein Lager für die Gelenkelemente des zweiten Federelements aus. Die Gelenkelemente des zweiten Federelements sind in den Gelenkelementen bzw. Laschen des ersten Federelements gelagert, so dass bei Betätigung des Muskeltrainers die Gelenkelemente des zweiten Federelements relativ zu denen des ersten Federelements eine Drehbewegung ausführen können. Diese Beweglichkeit zueinander vermeidet bzw. minimiert im Bereich der Gelenke die Biegebeanspruchung bei Betätigung des Muskeltrainers.

Bevorzugt sind die Gelenkelemente des zweiten Federelements abgerundet ausgeführt und die Gelenkelemente des ersten Federelements weisen eine Aufnahme auf, die entsprechend gekrümmt ist.

Bevorzugt sind die Gelenkelemente des ersten Federelements als Schnappelemente ausgebildet und die Gelenkelemente des zweiten Federelements als Rastelemente ausgebildet, wobei die Rastelemente in den Schnappelementen aufgenommen sind. Sowohl die Rastelemente als auch die Schnappelemente stellen hierbei Funktionselemente dar, die zusammengenommen eine Schnappverbindung zwischen dem ersten und dem zweiten Federelement ermöglichen. Das Schnappelement stellt dabei das Funktionselement dar, welches bei dem dabei entstehenden Formschluss das als Rastelement bezeichnete Funktionselement zumindest teilweise umschließt. Durch den Formschluss wird eine Relativbewegung zwischen jeweils einem Gelenkelement des ersten und des zweiten Federelements eingeschränkt, so dass eine versehentliche Trennung der beiden Federelemente unterbunden wird oder erschwert wird.

Bevorzugt sind die Schnappelemente und die Rastelemente zylinderförmig ausgeführt. Dabei kann das Rastelement in Form eines senkrechten Kreiszylinders ausgestaltet sein und das Schnappelement als ein Zylinder mit einem Kreisringsegment als Grundfläche ausgestaltet sein, wobei der Ausschnitt aus dem Kreisring bevorzugt größer als 180° ist. Somit wird das Rastelement von dem Schnappelement derart umschlossen, dass das Schnappelement zum Lösen bzw. zum Herstellen der Schnappverbindung elastisch verformt werden muss.

Bevorzugt bildet jeweils ein Gelenkelement des ersten Federelements mit einem Gelenkelement des zweiten Federelements einen Formschluss aus, der eine seitliche Bewegung des ersten Federelements relativ zum zweiten Federelement verhindert. Als eine seitliche Bewegung wird hierbei eine Bewegung parallel zur für die Federelemente definierten Querrichtung angesehen.

Bevorzugt wird der Formschluss durch jeweils mindestens einen Vorsprung an den Gelenkelementen des zweiten Federelements gebildet, der jeweils in eine korrespondierende Öffnung oder in korrespondierende Aussparungen an den Gelenkelementen des ersten Federelements eingreift. Der Vorsprung ist dabei im Wesentlichen in einer Richtung parallel zur Längsrichtung ausgerichtet, so dass durch den entstehenden Formschluss Relativbewegungen der entsprechenden Gelenkelemente des ersten und zweiten Federelements zueinander in Richtungen parallel zur Querrichtung verhindert werden.

Bevorzugt wird der Formschluss zwischen jeweils einem Gelenkelement des ersten Federelements und einem Gelenkelement des zweiten Federelements durch eine Veränderung der Wanddicke der Federelemente über deren Breite ausgebildet.

Eine solche Variation der Wanddicke kann sprunghaft erfolgen, wobei beispielsweise das erste Federelement im Bereich seiner Gelenkelemente jeweils eine Rippe aufweist, die in eine entsprechende Nut im Bereich der Gelenkelemente des zweiten Federelements eingreift.

Alternativ oder zusätzlich kann die Wanddicke des ersten Federelements, über die Breite des ersten Federelements gesehen, kontinuierlich variieren, wobei die Wanddicke beispielsweise in der Mitte am Größten ist und sich zu den Seitenrändern hin verringert. Dabei weist die Wanddicke des zweiten Federelements entsprechend, über die Breite des zweiten Federelements gesehen, ebenfalls eine Variation auf, wobei die Wanddicke in der Mitte am geringsten ist und sich zu den Seitenrändern hin vergrößert. Hierbei werden die Gelenkelemente als Teil des Federelements angesehen, so dass die beschriebene Variation der Wanddicke an den Gelenkelementen der Federelemente erfolgen kann.

Die Gelenke des vorgeschlagenen Muskeltrainers verbinden die beiden Federelemente sicher, so dass eine ungewollte Trennung der Federelemente nicht erfolgt. In bevorzugten Ausführungsformen werden Relativbewegungen der gepaarten Gelenkelemente zueinander in allen drei Raumrichtungen unterbunden, wobei eine Drehbewegung bei Betätigung des Muskeltrainers möglich bleibt. Durch diese Drehbewegung werden Biegebeanspruchungen bei der Betätigung des Muskeltrainers vorteilhafterweise in den Endbereichen weitgehend vermieden. Die Gelenke sind vorteilhafter Weise kompakt und beanspruchen wenig Raum.

Der Muskeltrainer ist einstückig ausgeführt oder der Muskeltrainer ist bevorzugt aus zwei Teilstücken zusammengesetzt, wobei jedes Teilstück eines der Federelemente umfasst.

Bevorzugt sind sowohl das erste Federelement als auch das zweite Federelement jeweils frei von Hinterschnitten ausgeführt. Dies ermöglicht eine einfache Fertigung der Federelemente mittels Spritzgießen. Vorteilhafter Weise kommt die Gussform ohne bewegliche Schieber aus, so dass eine kostengünstige Fertigung ermöglicht wird.

Bevorzugt können auf dem Muskeltrainer durch Erhebungen oder Vertiefungen Beschriftungen aufgebracht werden. Hierbei ist es besonders bevorzugt, auf der konvexen Seite des zweiten Federelements Beschriftungen über Erhebungen oder Vertiefungen aufzubringen, da hierdurch keine Hinterschneidungen erzeugt werden und nach wie vor eine besonders einfache und günstige Fertigung über ein Spritzgussverfahren möglich bleibt.

Wird der Muskeltrainer einstückig ausgeführt, so sind die beiden Federelemente des Muskeltrainers durch jeweils an den konvexen Seiten der Federelemente angeordnete federnde Bögen miteinander verbunden. Die federnden Bögen erlauben es hierbei, dass der Muskeltrainer in einem Stück gefertigt wird, wobei bei der Fertigung die Gelenkelemente noch nicht zu den Gelenken zusammengesetzt sein müssen. Die federnden Bögen erlauben es, die beiden Federelemente relativ zueinander zu bewegen, so dass nach der Fertigung, beispielsweise mittels Spritzgießen, die jeweiligen Gelenkelemente zu den Gelenken zusammengesetzt werden können.

Bevorzugt sind die beiden Federelemente aus einem thermoplastischen Kunststoff gefertigt. Der thermoplastische Kunststoff ist dabei bevorzugt ausgewählt aus Polyoxymethylen (POM), Polybutylenterephthalat (PBT), Polyamid (PA), Acrylnitril-Butadien-Styrol (ABS) und Polypropylen (PP).

Bevorzugt werden zum Erhalten von guten Gleiteigenschaften, bei denen nur eine geringe Reibung und keine Geräuschentwicklung bei einer Bewegung der Gelenkelemente relativ zueinander auftreten, für die beiden Federelemente jeweils unterschiedliche Materialien verwendet. Beispielsweise wird eines der Federelemente aus Polyoxymethylen (POM) gefertigt und das andere Federelement wird aus einem davon verschiedenen thermoplastischen Kunststoff gefertigt. Nachteilig an dieser Vorgehensweise ist jedoch, dass die beiden Federelemente ggf. unterschiedliche Eigenschaften, insbesondere Schwindungen aufweisen.

Alternativ hierzu können beide Federelemente aus dem gleichen thermoplastischen Kunststoff gefertigt werden, wobei ein tribologisch modifizierter thermoplastischer Kunststoff eingesetzt wird. Hierfür ist insbesondere tribologisch modifiziertes Polyoxymethylen (POM) geeignet. Für eine Optimierung der tribologischen Eigenschaften des Materials wird hierfür dem POM üblicherweise ein Silikonöl als Additiv zugegeben. Ein geeignetes tribologisch modifiziertes POM ist unter der Bezeichnung Ultraform N 2320 003 TR erhältlich. In dieser Ausführungsvariante sind bevorzugt beide Federelemente aus dem tribologisch modifizierten POM gefertigt. Dies hat den Vorteil, dass ein Verzug oder eine Schwindung bei der Fertigung beide Federelemente gleichartig betreffen, so dass die Federelemente problemlos und passgenau zu dem Muskeltrainer zusammengesetzt werden können.

Der Kunststoff der Federelemente kann unverstärkt oder verstärkt sein, wobei bei einem faserverstärkten Kunststoff ein Faseranteil von bis zu 60 Gewichts-% möglich ist. Geeignete Fasern sind beispielsweise ausgewählt aus Glasfasern, Aramidfasern, Kohlenstofffasern. Die Fasern können als Kurzfasern, Langfasern oder "Endlos-Fasern" vorliegen. Durch den Faseranteil kann gezielt die Steifigkeit der Federelemente und damit die Steifigkeit des Muskeltrainers beeinflusst werden.

Bevorzugt wird eine Gegenkraft der Federelemente durch die Wahl des Fasergehalts im thermoplastischen Kunststoff eingestellt, wobei der Fasergehalt im Bereich von 1 Gew.-% bis 50 Gew.-% gewählt ist.

Des Weiteren kann der Kunststoff je nach Bedarf zusätzlich Additive enthalten.

Bevorzugt umfassen die Krafteinleitungsbereiche der Federelemente jeweils ein Krafteinleitungselement. Das Krafteinleitungselement (bei der Anwendung als Handtrainer ein Griffelement) kann aus einem anderen Material als das Material der Federelemente gefertigt werden. Bevorzugt wird ein im Vergleich zum Material der Federelemente weiches Material verwendet, um eine für den Verwender angenehme Haptik zu erzielen. Beispielsweise wird das Griffelement aus einem Polyurethanschaum oder einem geschäumten thermoplastischen Elastomer (TPE) gefertigt.

Bevorzugt weist das Krafteinleitungselement auf der konkaven Seite des Federelements einen Abstandshalter auf, der die Durchbiegung des Muskeltrainers begrenzt.

Ein Weiterer Aspekt der Erfindung ist es, ein Verfahren zur Herstellung eines solchen Muskeltrainers bereitzustellen. Hierzu wird ein Verfahren vorgeschlagen, umfassend die Schritte:
a) Herstellen des ersten und zweiten Federelements mittels Spritzguss mit mindestens einer Spitzgussform,
b) Aufbiegen des ersten Federelements durch Krafteinwirkung auf die beiden Endbereiche des ersten Federelements und/oder Krümmen des zweiten Federelements durch Krafteinwirkung auf die beiden Endbereiche des zweiten Federelements,
c) Einsetzen des zweiten Federelements in das erste Federelement, und
d) Beenden der Krafteinwirkung auf das erste Federelement und/oder auf das zweite Federelement, wobei die Gelenkelemente des ersten Federelements und des zweiten Federelements Gelenke ausbilden.

Im Schritt a) des Verfahrens werden die beiden Federelemente mittels Spritzguss gefertigt. Vorteilhafter Weise weisen die beiden Federelemente keine Hinterschneidungen auf, so dass die dabei verwendete mindestens eine Spritzgussform keine Schieber aufweist. Die Spritzgussform kann daher besonders einfach und kostengünstig gefertigt werden.

Nach der Herstellung der beiden Federelemente sind die Gelenke noch nicht zusammengesetzt. Zum Einfügen von jeweils einem Gelenkelement des zweiten Federelements in das korrespondierende Gelenkelement des ersten Federelements werden im Schritt b) Kräfte auf das erste Federelement und/oder auf das zweite Federelement ausgeübt. Dabei wird das erste Federelement aufgebogen, wobei sich dessen Krümmung verringert und/oder das zweite Federelement wird stärker gekrümmt, so dass das zweite Federelement in das erste Federelement gemäß Schritt c) eingesetzt werden kann. Anschließend wird die Krafteinwirkung auf das erste Federelement und/oder auf das zweite Federelement beendet (Schritt d)). Das oder die Federelemente federn dabei zurück in ihre jeweilige Ausgangsposition, wobei der Formschluss entsteht und die Gelenke gebildet werden. Der Muskeltrainer ist einsatzbereit.

Weisen die Krafteinleitungsbereiche der Federelemente Krafteinleitungselemente auf, die aus einem anderen Material als das der Federelemente gefertigt sind, so werden im Schritt a) nach dem Herstellen der Federelemente diese in eine weitere Form zur Herstellung der Griffelemente eingelegt oder bewegt oder durch Zurückziehen von Schiebern wird eine entsprechende Form zur Herstellung der Krafteinleitungselemente erzeugt. Anschließend können die Krafteinleitungselemente an die Federelemente angespritzt werden.

Alternativ können die Krafteinleitungselemente auch separat hergestellt werden und dann form-, kraft- und/oder stoffschlüssig mit den Federelementen verbunden werden.

Ein weiterer Aspekt der Erfindung betrifft die Verwendung eines der beschriebenen Muskeltrainer als Handtrainer, als Armtrainer oder als Beintrainer.

### Beispiele

Es wurden verschiedene als Handtrainer ausgestaltete Muskeltrainer hergestellt, die jeweils identische geometrische Abmessungen aufweisen. Der für die Federelemente verwendete thermoplastische Kunststoff wurde jeweils variiert, um Handtrainer mit unterschiedlichen Steifigkeiten bzw. Federkräften herzustellen. Als thermoplastischer Kunststoff wurde Polyoxymethylen (POM) verwendet, wobei das POM einmal unverstärkt und in fünf weiteren Beispielen mit unterschiedlichen Anteilen an Glasfasern verstärkt wurde.

Die hergestellten Federelemente weisen eine gekrümmte, längliche Form auf, wobei die Breite der Federelemente an den Enden 25 mm und in der Mitte der Federelemente 19 mm beträgt. Die Länge des Federelements ohne Krafteinwirkung, gemessen als direkte Verbindungslinie zwischen den beiden Enden, beträgt 204 mm. Die Wanddicke des Materials beträgt 2,5 mm an den Enden und 5 mm in der Mitte. Die Krümmung der Federelemente ist so eingestellt, dass im zusammengebauten Zustand die beiden Federelemente in der Mitte einen Abstand zueinander von 59 mm aufweisen.

Zur Berechnung der Gegenkraft der Federelemente bei Anwendung im Muskeltrainer war zunächst die Bestimmung des Elastizitätsmoduls der verschiedenen Kunststoffmaterialien notwendig. Zum Messen des Elastizitätsmoduls des Kunststoffmaterials wurden Probekörper hergestellt und im Zugversuch nach ISO 527-2:1993 mit definierter Prüfgeschwindigkeit die Kraft und die Längenänderung gemessen. Die Zugversuche wurden an Probekörpern aus Polyoxymethylen (POM) mit verschiedenen Glasfaseranteilen durchgeführt, wobei die ermittelten Elastizitätsmodule, die die Steifigkeit des Prüfkörpers beschreiben, in der Tabelle 1 angegeben sind. Diese wurden jeweils mit einer Prüfgeschwindigkeit von 1 mm/min ermittelt.

**(Tabelle 1)**

| Material | Elastizitätsmodul [MPa] bei 1 mm/min |
|---|---|
| POM unverstärkt | ∼2700 |
| POM mit 5 Gewichts-% Faseranteil | ∼3500 |
| POM mit 10 Gewichts-% Faseranteil | ∼4600 |
| POM mit 15 Gewichts-% Faseranteil | ∼5950 |
| POM mit 25 Gewichts-% Faseranteil | ∼8800 |

Die Zugversuche zeigen, dass durch Zugabe von 5 bis 25 Gewichts-% Glasfasern der Elastizitätsmodul des Materials von 2700 MPa für unverstärktes Material auf 8800 MPa für mit 25 Gewichts-% Glasfaseranteil verstärktem Material gesteigert werden kann.

Die Berechnung ergab, dass Federelemente mit 25 Gewichts-% Glasfaseranteil bereits für die Anwendung als Handtrainer zu steif waren. Deshalb wurden Federelemente für Handtrainer aus unverstärktem Material sowie aus fünf Materialien mit unterschiedlichem Glasfaseranteil hergestellt. Jeweils zwei Federelemente mit identischem Faseranteil wurden zu einem Handtrainer zusammengesetzt und es wurde die Steifigkeit der hergestellten Handtrainer bestimmt. Hierzu wurde ein Handtrainer in eine Prüfapparatur eingesetzt, bei der über einen Stempel Kraft in vertikaler Richtung auf den Krafteinleitungsbereich eines der Federelemente ausgeübt wurde. Das andere Federelement lag auf einem Tisch auf, so dass der Handtrainer durch die Kraftausübung zunehmend zusammengedrückt wurde. Der Verformungsweg des Handtrainers und die ausgeübte Kraft wurden gemessen.

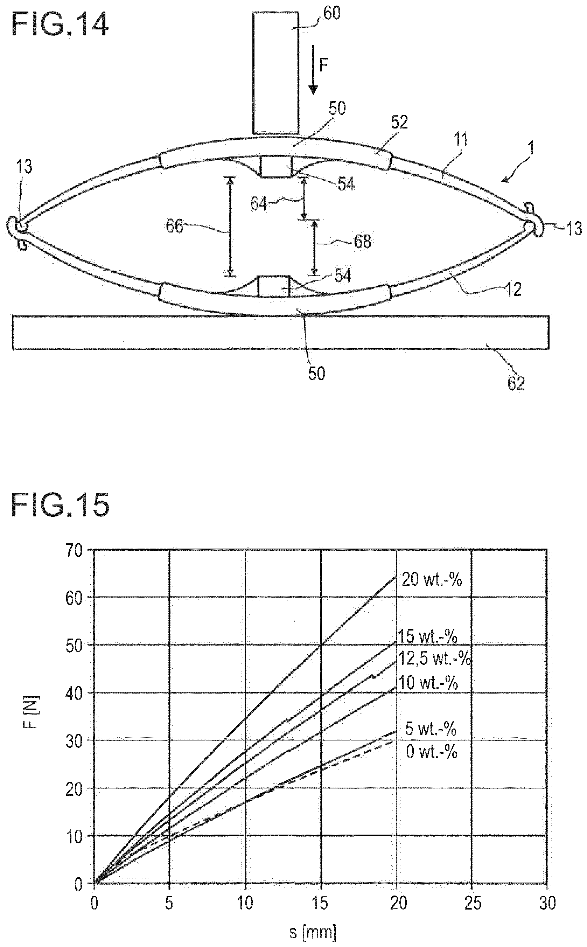

Die Messergebnisse für die fünf getesteten Handtrainer sind in Figur 15 dargestellt. In dem Diagramm der Figur 15 ist auf der X-Achse der Verformungsweg in mm und auf der Y-Achse die Kraft in N aufgetragen.

In den Kraft-Weg-Kurven der Figur 15 ist zu erkennen, dass die Handtrainer bei kleinem Verformungsweg ein leicht nicht-lineares Verhalten zeigen, wobei bei den Handtrainern mit Federelementen aus dem faserverstärkten Material die für eine bestimmte Verformung notwendige Kraft mit zunehmenden Fasergehalt stetig ansteigt. Der Handtrainer aus dem unverstärkten Material weist ein stärkeres nicht-lineares Verhalten auf, so dass die für eine Verformung notwendige Kraft bis zu etwa 3 mm Verformung zunächst etwa genauso hoch ist, wie bei dem Handtrainer mit 10 Gewichts-% Faseranteil. Bei einem Verformungsweg von 10 mm entspricht die für die Verformung notwendige Kraft des Handtrainers aus unverstärktem Material der des Handtrainers mit 5 Gewichts-% Faseranteil. Oberhalb von 10 mm weisen alle Handtrainer aus mit Fasern verstärkten Materialien eine größere erforderliche Kraft auf als der Handtrainer aus dem unverstärkten Material.

Die Steifigkeit eines Handtrainers wird definiert als die Steigung der Kraft-Weg-Kurve. Aufgrund der leichten Nichtlinearität nimmt die Steifigkeit mit zunehmendem Verformungsweg leicht ab.

In dem Bereich der maximalen gemessenen Verformung von 20 mm wurde die Steifigkeit für den Bereich von 15 mm bis 20 mm Verformungsweg ausgewertet. Die für die getesteten Handtrainer ermittelte Steifigkeit ist in der Tabelle 2 angegeben.

**(Tabelle 2)**

| Material | Steifigkeit [N/mm] |
|---|---|
| POM unverstärkt | 1,2 |
| POM mit 5 Gewichts-% Faseranteil | 1,5 |
| POM mit 10 Gewichts-% Faseranteil | 1,7 |
| POM mit 12,5 Gewichts-% Faseranteil | 2,1 |
| POM mit 15 Gewichts-% Faseranteil | 2,4 |
| POM mit 20 Gewichts-% Faseranteil | 2,9 |

Ausführungsbeispiele der Erfindung sind in den Figuren dargestellt und werden in der nachfolgenden Beschreibung näher erläutert.

Es zeigen:
Figur 1 eine erste Ausführungsform eines Muskeltrainers in einer Ansicht von vorne,
Figur 1a eine Ausgestaltung des Muskeltrainers der ersten Ausführungsform als Handtrainer mit Griffelementen in einer Ansicht von vorne,
Figur 2 den Muskeltrainer der ersten Ausführungsform in einer Ansicht von unten,
Figur 3 eine weitere Ausführungsform des Muskeltrainers in einer Ansicht von unten,
Figur 4 eine perspektivische Ansicht einer ersten Ausführungsform eines ersten Federelements,
Figur 5 eine perspektivische Ansicht einer ersten Ausführungsform eines zweiten Federelements,
Figur 6 eine perspektivische Ansicht einer zweiten Ausführungsform eines ersten Federelements,
Figur 7 eine perspektivische Ansicht einer zweiten Ausführungsform eines zweiten Federelements,
Figur 8 eine perspektivische Ansicht einer dritten Ausführungsform eines ersten Federelements,
Figur 8a die dritte Ausführungsform des ersten Federelements in einer Ansicht von vorne,
Figur 9 eine perspektivische Ansicht einer dritten Ausführungsform eines zweiten Federelements,
Figur 10 eine perspektivische Ansicht einer Variante der dritten Ausführungsform eines zweiten Federelements,
Figur 11 eine vierte Ausführungsform eines ersten und zweiten Federelements,
Figur 12 ein einteiliges Ausführungsbeispiel eines Handtrainers in einer Ansicht von vorne,
Figur 13 das einteilige Ausführungsbeispiel eines Handtrainers in einer Ansicht von oben,
Figur 14 eine Prüfanordnung zur Bestimmung der Steifigkeit des Muskeltrainers, und
Figur 15 ein Kraft-Weg Diagramm für verschiedene Ausführungsbeispiele des Handtrainers.

In der nachfolgenden Beschreibung der Ausführungsbeispiele der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

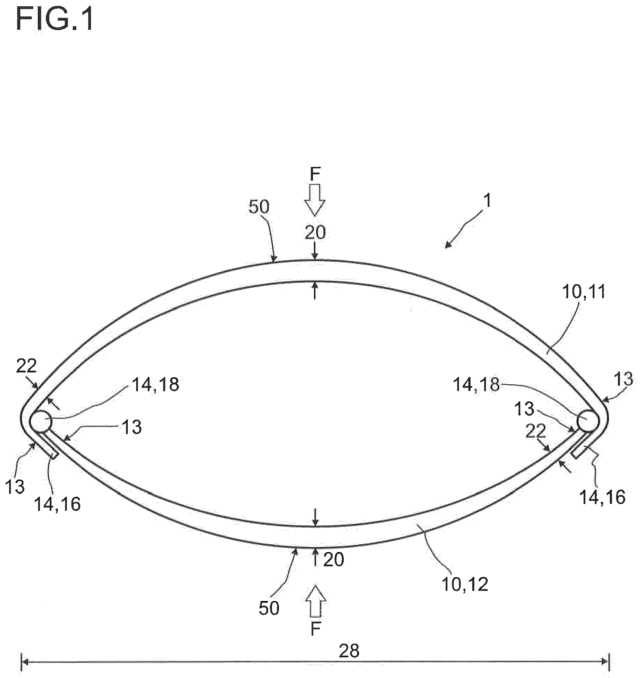

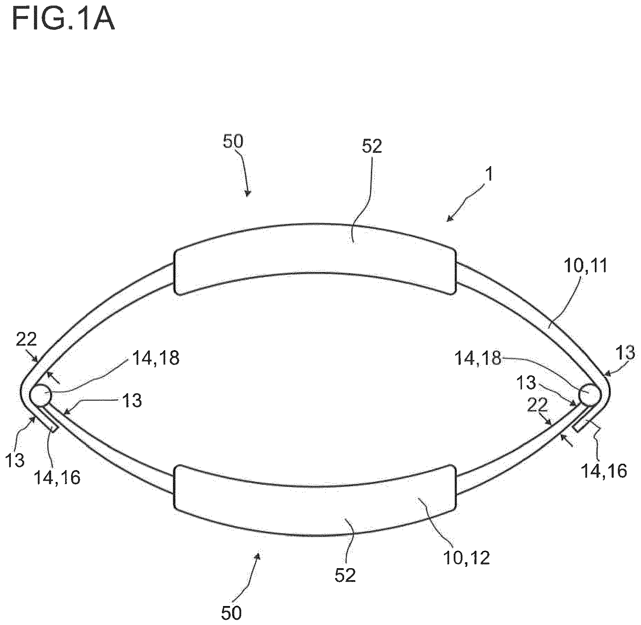

In Figur 1 ist eine erste Ausführungsform eines Muskeltrainers 1 in einer Ansicht von vorne dargestellt. Der Muskeltrainer 1 umfasst zwei längliche gekrümmte Federelemente 10, nämlich ein erstes Federelement 11 und ein zweites Federelement 12.

Die beiden Federelemente 10 sind in der Ansicht von vorne sichelförmig ausgestaltet, wobei an den jeweiligen Endbereichen 13 jeweils ein Gelenkelement 14 angeordnet ist. Die beiden Federelemente 10 sind in dem Handtrainer 1 derart zueinander angeordnet, dass deren konkaven Seiten einander zugewandt sind.

Die Gelenkelemente 14 des ersten Federelements 11 sind in dem dargestellten Ausführungsbeispiel als umgebogene Laschen 16 ausgeführt, wobei der direkt an das erste Federelement 11 angrenzende Bereich einer Lasche 16 in die gleiche Richtung wie das Federelement 11 gekrümmt ist, jedoch einen wesentlich kleineren Biegeradius aufweist. Die Lasche 16 läuft in einem Bereich aus, der keine Krümmung aufweist.

Die entsprechenden Gelenkelemente 14 des zweiten Federelements 12 sind in dem dargestellten Ausführungsbeispiel als Walzen 18 ausgeführt, wobei der Radius einer Walze 18 dem Biegeradius einer Lasche 16 im Wesentlichen entspricht. Die Walzen 18 sind mit ihren Achsen parallel zur Querrichtung ausgerichtet und grenzen jeweils an ein Ende des zweiten Federelements 12 an. Eine Lasche 16 bildet dabei ein Lager aus, in dem eine Walze 18 drehbar gelagert ist. In weiteren Ausführungsvarianten können beispielsweise anstelle von Walzen 18 als Gelenkelemente 14 des zweiten Federelements 12 die Endbereiche 13 des zweiten Federelements 12 abgerundet werden, wobei der Radius der Abrundung bevorzugt dem Biegeradius der Lasche 16 entspricht.

In der Mitte weisen die Federelemente 10 Krafteinleitungsbereiche 50 auf. Bei einer Betätigung des Muskeltrainers 1 wirken senkrecht zu den Federelementen 10 Kräfte F auf die Krafteinleitungsbereiche 50 ein. Hierdurch verbiegen sich die Federelemente 10 elastisch. An den Endbereichen 13 der Federelemente 10 treten dabei keine oder nur sehr geringe Biegebeanspruchungen auf, da die Gelenkelemente 14 eine Drehung erlauben. Die größte Biegebelastung tritt in der Mitte der Federelemente 10 auf und nimmt in Richtung der Randbereiche 13 ab. Dementsprechend ist es bevorzugt die Wanddicke der Federelemente 10 entsprechend der Biegebelastung zu variieren, wobei die Federelemente 10 in der Mitte ihre größte Wanddicke 20 aufweisen und die Wanddicke zu den Endbereichen 13 hin abnimmt, so dass die Federelemente 10 an den Endbereichen 13 ihre geringste Wanddicke 22 aufweisen. Die Längsausdehnung der Federelemente 10 ist in der Figur 1 mit dem Bezugszeichen 28 angedeutet.

In Figur 1a ist eine Ausgestaltung des Muskeltrainers 1 als Handtrainer mit als Griffelementen ausgestalteten Krafteinleitungselementen 52 in einer Ansicht von vorne dargestellt. Der in Figur 1a dargestellte Handtrainer entspricht dem mit Bezug zu Figur 1 beschriebenen Muskeltrainer 1, jedoch weisen die Federelemente 10 an den Krafteinleitungsbereichen 50 jeweils ein Krafteinleitungselement 52 in Form eines Griffelements auf. Die Griffelemente sind bevorzugt aus einem anderen Material gefertigt, als das der Federelemente 10. Hierbei wird zur Verbesserung der Haptik bevorzugt ein Material ausgewählt, welches im Vergleich zu dem Material der Federelemente 10 weich ist. Beispielsweise können die Griffelemente 52 aus einem geschäumten Polyurethan gefertigt sein.

Die Federwirkung des Muskeltrainers 1 ist über die Wahl der Geometrie der Federelemente 10 und die Wahl des Materials der Federelemente 10 derart eingestellt, dass die maximale Federkraft in einem für die Anwendung als Handtrainer geeigneten Bereich liegt. Hierzu ist die maximale Federkraft bevorzugt so eingestellt, dass diese im Bereich von 40 bis 150 N liegt. Besonders bevorzugt liegt die maximale Federkraft im Bereich von 50 bis 100 N

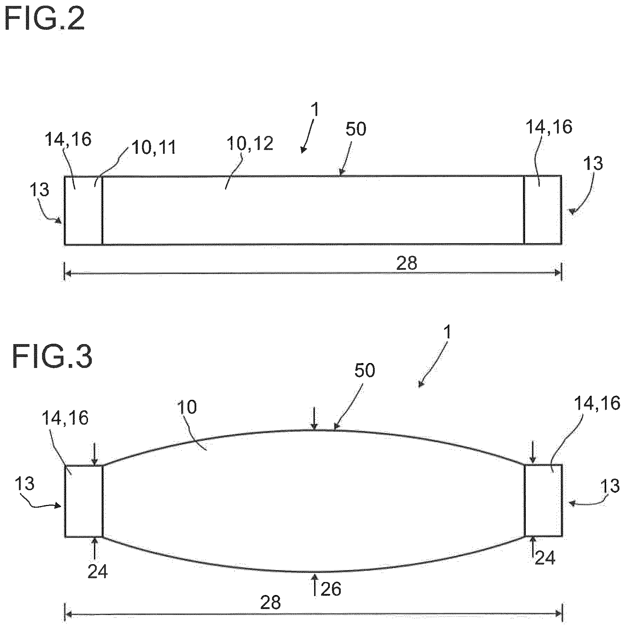

In Figur 2 ist der mit Bezug zu Figur 1 beschriebene Muskeltrainer 1 der ersten Ausführungsform in einer Ansicht von unten dargestellt.

In dieser Ansicht von unten ist in Verbindung mit der Ansicht von vorne der Figur 1 erkennbar, dass die Form der Federelemente 10 als ein senkrechtes Zylindersegment beschrieben werden kann, das die in Figur 1 erkennbare sichelförmige Grundfläche aufweist. Ebenfalls in der Ansicht von unten ist ersichtlich, dass die Laschen 16 des ersten Federelements 11 das zweite Federelement 12 bzw. dessen entsprechende Gelenkelemente 14 (in der Figur 2 nicht sichtbar, vergleiche Figur 1) zumindest teilweise umschließen.

Figur 3 zeigt eine weitere Ausführungsform des Handtrainers 1 in einer Ansicht von unten. Der Muskeltrainer 1 weist wie mit Bezug zu Figur 1 beschrieben zwei Federelemente 10 auf, die an ihren Endbereichen 13 über Gelenkelemente 14 miteinander verbunden sind. Zusätzlich oder alternativ zu einer Variation der Wanddicke ist in der Ausführungsform der Figur 3 vorgesehen, die Breite der Federelemente 10 über die Längsausdehnung 28 zu variieren. Da in der Mitte der Federelemente 10 die größte Biegebelastung auftritt, weisen die Federelemente 10 bevorzugt in der Mitte die größte Breite 26 auf. Die Breite nimmt in Richtung der Randbereiche 13 ab, so dass an den Randbereichen 13 die kleinste Breite 24 der Federelemente 10 vorliegt.

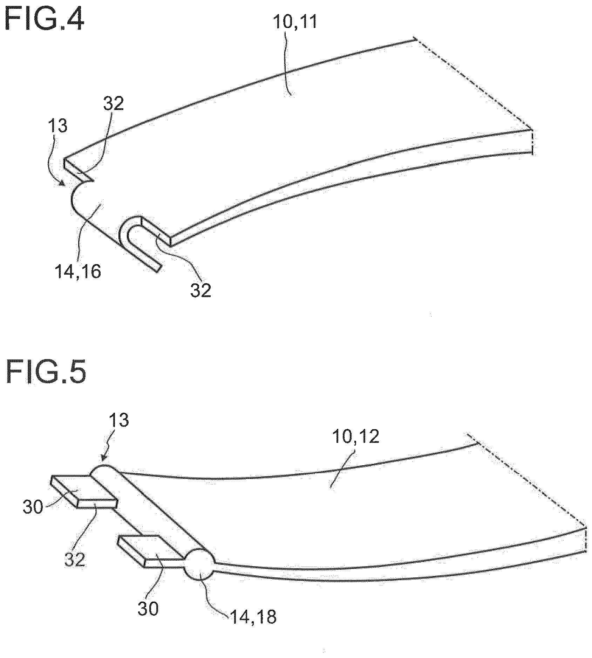

In Figur 4 ist in einer perspektivischen Ansicht ein Ausschnitt einer ersten Ausführungsform eines ersten Federelements 11 dargestellt. Wie bereits mit Bezug zur Figur 1 beschrieben, weist das erste Federelement 11 an seinen Endbereichen 13 jeweils ein Gelenkelement 14 in Form einer Lasche 16 auf, wobei in der Figur 4 nur ein Endbereich 13 sichtbar ist. Die Lasche 16 ist derart angeordnet, dass das erste Federelement 11 stetig in die Lasche 16 übergeht. Die Lasche 16 ist in Richtung der konkaven Seite des ersten Federelements 11 umgebogen. Die Lasche 16 weist dabei einen Bereich starker Krümmung auf, der an das erste Federelement 11 angrenzt und läuft an ihrem anderen Ende in einem Bereich ohne Krümmung aus.

In der Darstellung der Figur 4 ist ersichtlich, dass die Breite der Lasche 16 geringer ist als die Breite des ersten Federelements 11. Zu beiden Seiten der Lasche 16 befinden sich Aussparungen 32, wobei die Lasche 16 über die Breite des Federelements 11 gesehen zentriert angeordnet ist.

Figur 5 zeigt in einer perspektivischen Ansicht einen Ausschnitt einer ersten Ausführungsform eines zweiten Federelements 12. Das zweite Federelement 12 weist an seinem Endbereich 13 ein Gelenkelement 14 auf, welches als Walze 18 ausgestaltet ist. Auf der dem Federelement 12 entgegengesetzten Seite grenzen zwei Vorsprünge 30 an das Gelenkelement 14 an. Die Ausrichtung der Vorsprünge 30 ist derart gewählt, dass diese in direkter Verlängerung des zweiten Federelements 12 angeordnet sind. Zwischen den beiden Vorsprüngen 30 befindet sich eine Aussparung 32. Die Größe und insbesondere die Breite der Aussparung 32 ist so gewählt, dass die in Figur 4 gezeigte Lasche 16 des ersten Federelements 11 in die Aussparung 32 zwischen den beiden Vorsprüngen 30 eingreifen kann und dabei ein Formschluss entsteht, der eine Relativbewegung zwischen dem ersten Federelement 11 und dem zweiten Federelement 12 in Querrichtung verhindert. Da zusätzlich die Walze 18 in der Lasche 16 gelagert wird, ist auch eine Relativbewegung zwischen dem ersten Federelement 11 und dem zweiten Federelement 12 in vertikaler Richtung durch Formschluss verhindert.

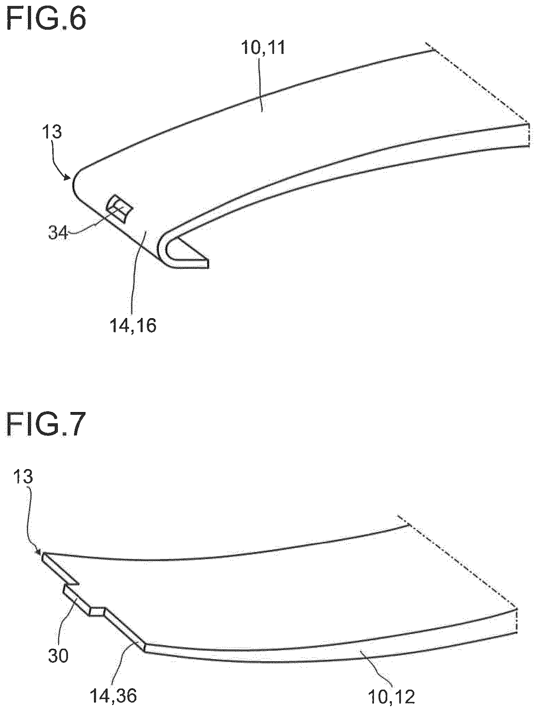

In Figur 6 ist eine perspektivische Ansicht eines Ausschnitts einer zweiten Ausführungsform eines ersten Federelements 11 dargestellt. Wie bereits mit Bezug zu den Figuren 1 und 4 beschrieben, weist das erste Federelement 11 an seinem in Figur 6 sichtbaren Endbereich 13 ein Gelenkelement 14 in Form einer Lasche 16 auf, welche in Richtung der konkaven Seite des ersten Federelements 11 umgebogen ist. Die Lasche 16 weist dabei einen Bereich starker Krümmung auf, der an das erste Federelement 11 angrenzt und läuft an ihrem anderen Ende in einem Bereich ohne Krümmung aus.

Die Breite der Lasche 16 entspricht in dem in Figur 6 dargestellten Ausführungsbeispiel der Breite des ersten Federelements 11 und die Lasche 16 ist derart angeordnet, dass das erste Federelement 11 stetig in die Lasche 16 übergeht. Im Bereich der stärksten Krümmung der Lasche 16 weist diese eine Öffnung 34 auf. Die Öffnung 34 ist über die Breite des ersten Federelements 11 gesehen in der Mitte angeordnet.

Figur 7 zeigt einen Ausschnitt einer perspektivischen Darstellung einer zweiten Ausführungsform eines zweiten Federelements 12. Das zweite Federelement 12 weist in der dargestellten Ausführungsform an seinen Endbereichen 13 jeweils ein Gelenkelement 14 auf, welches als Abrundung 36 ausgestaltet ist. Der Krümmungsradius der Abrundung 36 entspricht hierbei bevorzugt der halben Wanddicke des zweiten Federelements 12 an dem jeweiligen Ende, so dass ein stetiger Übergang zwischen dem zweiten Federelement 12 und den Abrundungen 36 vorliegt.

An seinen Endbereichen 13 weist das zweite Federelement 12 der zweiten Ausführungsform jeweils einen Vorsprung 30 auf, dessen Breite etwa der Breite der Öffnung 34 der in Figur 6 dargestellten zweiten Ausführungsform des ersten Federelements 11 entspricht. Im zusammengebauten Zustand des Muskeltrainers 1 wird ein Formschluss zwischen dem Vorsprung 30 und der Öffnung 34 ausgebildet, der eine Relativbewegung zwischen dem ersten Federelement 11 und dem zweiten Federelement 12 in Richtungen parallel zur Querrichtung und parallel zur Vertikalrichtung unterbindet. Die Abrundung 36 ist dabei in einem durch die Lasche 16 gebildeten Lager gelagert. Die Höhe der Öffnung 34 ist bevorzugt größer ausgeführt als die Dicke des Vorsprungs 30, um eine Schwenkbewegung in dem gebildeten Lager bei einer Betätigung des Muskeltrainers zu ermöglichen.

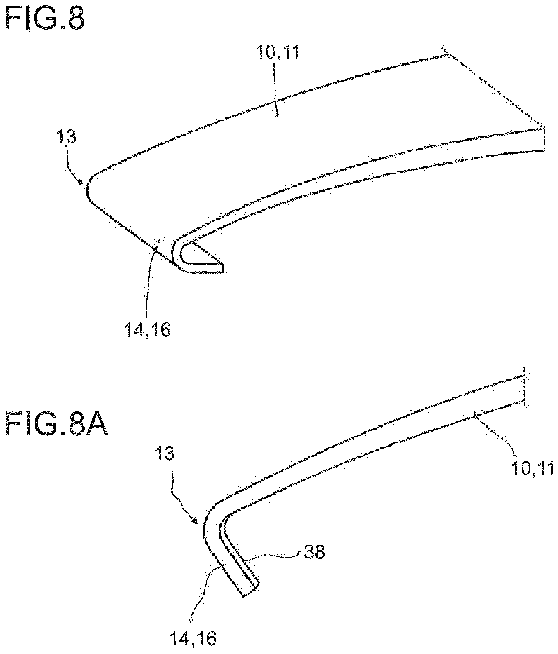

Figur 8 zeigt einen Ausschnitt einer perspektivischen Ansicht einer dritten Ausführungsform eines ersten Federelements und in der Figur 8a das erste Federelement 11 der dritten Ausführungsform in einer Ansicht von vorne dargestellt.

Wie bereits mit Bezug zu den Figuren 1 und 4 beschrieben, weist das erste Federelement 11 an seinem in Figur 8 sichtbaren Endbereich 13 ein Gelenkelement 14 in Form einer Lasche 16 auf, welche in Richtung der konkaven Seite des ersten Federelements 11 umgebogen ist. Die Lasche 16 weist dabei einen Bereich starker Krümmung auf, der an das erste Federelement 11 angrenzt und läuft an ihrem anderen Ende in einem Bereich ohne Krümmung aus.

Auf der der konkaven Seite des ersten Federelements 11 zugewandten Fläche der Laschen 16 ist jeweils eine Rippe 38 angeordnet. Die Rippe 38 ist nur in der Darstellung von vorne der Figur 8a zu erkennen. Die Rippe 38 ist mit Bezug zur Breite des ersten Federelements 11 bevorzugt in der Mitte angeordnet. Die Rippen 38 stellen in den Bereichen der Laschen 16 des ersten Federelements 11 eine sprunghafte Änderung der Wanddicke dar. Die Rippe 38 geht bevorzugt mit einer entsprechenden Nut 40 eines Gelenkelements 14 des zweiten Federelements 12 einen Formschluss ein. Zusätzlich oder alternativ zu dem Vorsehen der Rippen 38 kann vorgesehen sein, dass mit Bezug zur Breite der Lasche 16 die Wanddicke ausgehend vom Rand in Richtung der Rippe 38 kontinuierlich zunimmt oder abnimmt.

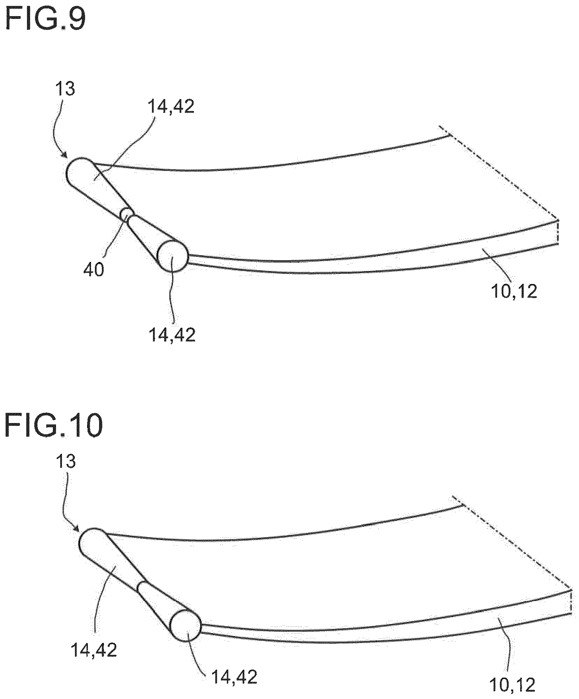

Figur 9 zeigt einen Ausschnitt einer perspektivischen Ansicht einer dritten Ausführungsform eines zweiten Federelements 12.

Das zweite Federelement 12 der Figur 9 weist an seinem Endbereich 13 ein Gelenkelement 14 auf, welches in Form zweier Kegelstümpfe 42 ausgeführt ist. Die beiden Kegelstümpfe 42 sind derart angeordnet, dass die Deckflächen der Kegelstümpfe 42 zueinander weisen. Die Kegelachsen der Kegelstümpfe 42 sind parallel zur Querrichtung ausgerichtet. Zwischen den beiden Kegelstümpfen 42 befindet sich ein Freiraum in Form einer Nut 40, die mit einer Rippe 38 des ersten Federelements 11 zusammen einen Formschluss ausbilden kann. Der Winkel zwischen der Kegelachse und der Mantellinie der Kegelstümpfe 42 ist bevorzugt so gewählt, dass dieser der Variation der Wanddicke der Lasche 16 des ersten Federelements 11 entspricht und ebenfalls einen Formschluss ausbildet.

Weist die Lasche 16 des ersten Federelements 11 außer der Rippe 38 keine weitere Variation der Wanddicke auf, so wird bevorzugt das Gelenkelement 14 als eine Walze 18 mit einer Nut 40 in der Mitte ausgeführt, wobei die Walze 18 auch als zwei Kegelstümpfe 42 mit einem Winkel von 0° zwischen der Kegelachse und der Mantellinie angesehen werden kann.

Weist das erste Federelement 11 der dritten Ausführungsform nur eine kontinuierliche Variation der Wanddicke, aber keine Rippe 38 auf, so kann die Nut 40 zwischen den beiden Kegelstümpfen 42 entfallen. Dies ist in der Figur 10 dargestellt.

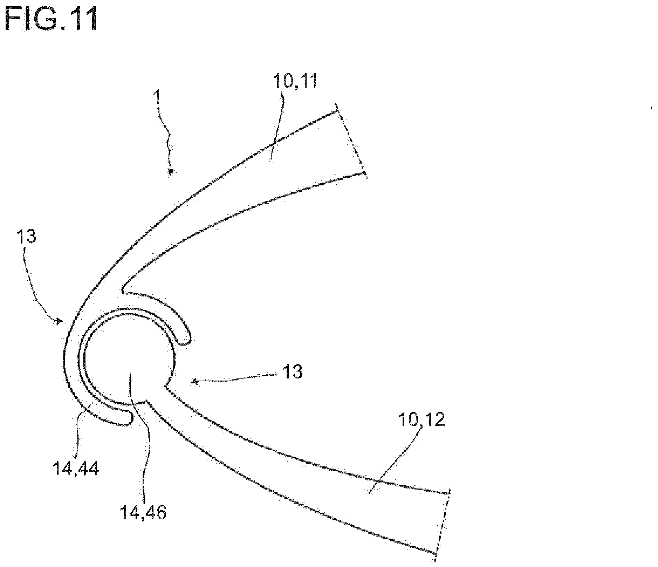

Figur 11 zeigt eine vierte Ausführungsform eines ersten Federelements 11 und eines zweiten Federelements 12 in einer Darstellung von vorne. Dabei zeigt die Figur 11 die beiden Federelemente 10 in einem montierten Zustand des Muskeltrainers 1.

Die beiden Federelemente 10 weisen jeweils an ihren Endbereichen 13 Gelenkelemente 14 auf, wobei die Gelenkelemente 14 des ersten Federelements 11 als Schnappelemente 44 und die Gelenkelemente 14 des zweiten Federelements 12 als Rastelemente 46 ausgestaltet sind.

Sowohl die Rastelemente 46 als auch die Schnappelemente 44 stellen hierbei Funktionselemente dar, die zusammengenommen eine Schnappverbindung zwischen dem ersten Federelement 11 und dem zweiten Federelement 12 herstellen. Das Schnappelement 44 stellt dabei das Funktionselement dar, welches bei dem dabei entstehenden Formschluss das als Rastelement 46 bezeichnete Funktionselement zumindest teilweise umschließt.

Bevorzugt sind die Schnappelemente 44 und die Rastelemente 46 als senkrechte Zylinder ausgeführt, wobei das Rastelement 46 im dargestellten Ausführungsbeispiel in Form eines senkrechten Kreiszylinders ausgestaltet ist. Das Schnappelement ist in dem in der Figur 11 dargestellten Beispiel als ein Zylinder mit einem Kreisringsegment als Grundfläche ausgestaltet, wobei der Ausschnitt aus dem Kreisring größer als 180° ist. Somit wird das Rastelement 46 von dem Schnappelement 44 derart umschlossen, dass das Schnappelement 44 zum Lösen bzw. zum Herstellen der Schnappverbindung elastisch verformt werden muss.

Durch den Formschluss wird eine Relativbewegung zwischen den beiden Federelementen 10 derart eingeschränkt, dass eine versehentliche Trennung der beiden Federelemente 10 unterbunden wird oder zumindest erschwert wird.

Die mit Bezug zu Figuren 4 bis 5 und 8 bis 10 beschriebenen Ausführungen können auch mit der mit Bezug zu Figur 11 beschriebenen Ausführung kombiniert werden.

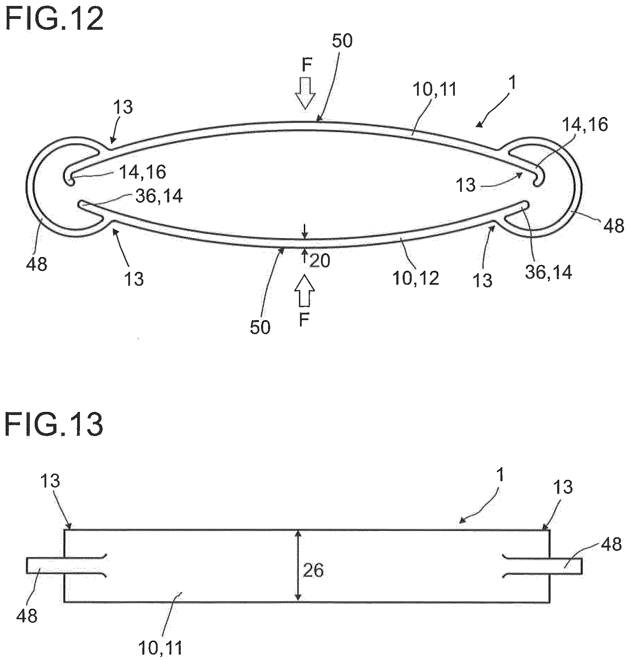

Figur 12 zeigt ein einteiliges Ausführungsbeispiel eines als Handtrainer ausgeführten Muskeltrainers 1 in einer Ansicht von vorne.

Der in Figur 12 gezeigte als Handtrainer ausgeführte Muskeltrainer 1 ist einstückig ausgeführt und umfasst zwei längliche gekrümmte Federelemente 10, nämlich ein erstes Federelement 11 und ein zweites Federelement 12. Die beiden Federelemente 10 sind in der Ansicht von vorne sichelförmig ausgestaltet, wobei an den jeweiligen Endbereichen 13 jeweils ein Gelenkelement 14 angeordnet ist. Die beiden Federelemente 10 sind in dem Muskeltrainer 1 derart zueinander angeordnet, dass deren konkaven Seiten einander zugewandt sind.

Der Muskeltrainer 1 ist in einem Zustand dargestellt, in dem die Gelenkelemente 14 der Federelemente 10 noch nicht zu Gelenken zusammengefügt sind. Die Gelenkelemente 14 des ersten Federelements 11 sind in dem dargestellten Ausführungsbeispiel als umgebogene Laschen 16 ausgeführt, wobei der direkt an das erste Federelement 11 angrenzende Bereich einer Lasche 16 in die gleiche Richtung wie das Federelement 11 gekrümmt ist, jedoch einen wesentlich kleineren Biegeradius aufweist. Die Lasche 16 läuft in einem Bereich aus, der keine Krümmung aufweist.

Die entsprechenden Gelenkelemente 14 des zweiten Federelements 12 sind in dem dargestellten Ausführungsbeispiel als Abrundungen 36 ausgeführt, wobei der Radius der Abrundungen im Wesentlichen der halben Wanddicke des zweiten Federelements 12 in dessen Randbereich 13 entspricht und ebenfalls dem Biegeradius der Lasche 16 im Wesentlichen entspricht. Die Abrundungen 36 grenzen jeweils an die Enden des zweiten Federelements 12 an und gehen nahtlos in das zweite Federelement 12 über. Eine Lasche 16 bildet dabei ein Lager aus, in dem die Abrundung 36 drehbar gelagert werden kann.

Die beiden Federelemente 10 sind in dem einstückig ausgeführten Muskeltrainer 1 über zwei federnde Bögen 48 miteinander verbunden. Die Federelemente 10 weisen dazu jeweils an ihren Endbereichen 13 Verbindungen zu einem der federnden Bögen 48 auf. Die federnden Bögen 48 erlauben eine Relativbewegung zwischen den beiden Federelementen 10, so dass die zunächst noch getrennten Gelenkelemente 14 zu den Gelenken zusammengesetzt werden können. Zur Montage wird beispielsweise auf die Endbereiche 13 des ersten Federelements 11 eine Kraft ausgeübt, so dass sich das erste Federelement 11 verformt und die Krümmung des ersten Federelements 11 reduziert wird. Anschließend wird das zweite Federelement 12 in das erste Federelement 11 eingesetzt, sodass nach Entlastung des ersten Federelements 11 jeweils ein Gelenkelement 14 des ersten Federelements 11 mit einem Gelenkelement 14 des zweiten Federelements 12 ein Gelenk ausbildet. Nach der Montage sind die beiden Federelemente 10 an ihren Endbereichen 13 jeweils durch ein Gelenk und einen federnden Bogen 48 miteinander verbunden.

In der Mitte weisen die Federelemente 10 Krafteinleitungsbereiche 50 auf. Bei einer Betätigung des als Handtrainer ausgeführten Muskeltrainers 1 wirken senkrecht zu den Federelementen 10 Kräfte F auf die Krafteinleitungsbereiche 50 ein. Hierdurch verbiegen sich die Federelemente 10 elastisch. An den Endbereichen 13 der Federelemente 10 treten dabei keine oder nur sehr geringe Biegebeanspruchungen auf, da die Gelenkelemente 14 eine Drehung erlauben. Die größte Biegebelastung tritt in der Mitte der Federelemente 10 auf und nimmt in Richtung der Randbereiche 13 ab. In der in Figur 12 dargestellten Ausführungsform ist die Wanddicke 20 der Federelemente 10 über deren gesamte Länge konstant. In weiteren Ausführungsformen ist es bevorzugt, die Wanddicke der Federelemente 10 entsprechend der Biegebelastung zu variieren, wobei die Federelemente 10 in der Mitte ihre größte Wanddicke 20 aufweisen und die Wanddicke zu den Endbereichen 13 hin abnimmt.

Figur 13 zeigt das einteilige Ausführungsbeispiel des als Handtrainer ausgeführten Muskeltrainers 1 in einer Ansicht von oben. Der Muskeltrainer 1 ist noch nicht montiert. Das zweite Federelement 12 ist vollständig durch das erste Federelement 11 verdeckt.

In der in der Figur 13 dargestellten Ausführungsform variiert die Breite der beiden Federelemente 10 nicht über die Länge der Federelemente 10, so dass die Federelemente 10 die konstante Breite 26 aufweisen. Ebenfalls aus der Darstellung der Figur 13 ist ersichtlich, dass die Breite der federnden Bögen 48 wesentlich geringer ist als die Breite der Federelemente 10. Die federnden Bögen 48 sind mit Bezug auf die Breite der Federelemente 10 gesehen bevorzugt in der Mitte angeordnet.

In Figur 14 ist schematisch eine Prüfanordnung zur Bestimmung der Steifigkeit eines Muskeltrainers 1 dargestellt.

Zur Bestimmung der Steifigkeit wird eine Kraft-Weg-Messung durchgeführt, bei der ein Verformungsweg 64 bestimmt wird. Dazu wird der zu prüfende Muskeltrainer 1 auf einen Tisch 62 platziert, wobei eines der Federelemente 12 mit dessen Krafteinleitungsbereich 50 auf dem Tisch 62 aufliegt. Über einen Stempel 60 wird eine Kraft F auf den Krafteinleitungsbereich 50 des anderen Federelements 11 ausgeübt. Dabei verringert sich der Abstand zwischen zwei Abstandshaltern 54 von einem ersten Abstand 66 zu einem zweiten Abstand 68. Die Differenz zwischen dem ersten Abstand 66 und dem zweiten Abstand 68 entspricht dem Verformungsweg 64. Durch die zwischen den Krafteinleitungsbereichen 50 der beiden Federelemente 11, 12 eingebrachten Abstandshalter 54 kann die maximale Federkraft und die maximale Federverformung begrenzt werden. In diesem Fall wird die Krümmung der Federelemente 11, 12 auch bei Aufbringen der maximalen Federkraft nicht ganz aufgehoben.

In der in Figur 14 dargestellten Ausführungsvariante des Handtrainers 1 sind die beiden Federelemente 11, 12 jeweils identisch ausgestaltet.

Während der Messung werden der Verformungsweg 64 und die zugehörige Kraft F aufgezeichnet.

Figur 15 zeigt ein Kraft-Weg Diagramm für verschiedene Ausführungsbeispiele des Handtrainers.

In dem Diagramm der Figur 15 ist auf der X-Achse der Verformungsweg in mm und auf der Y-Achse die Kraft in N aufgetragen. Das Diagramm stellt Messungen für sechs verschiedene Beispiele eines Handtrainers dar, die jeweils identische Abmessungen aufweisen und sich nur im Fasergehalt des für die Federelemente verwendeten Kunststoffs unterscheiden. Die Federelemente wurden aus Polyoxymethylen (POM) mit Faseranteilen von 0 Gewichts-%, 5 Gewichts-%, 10 Gewichts-%, 12,5 Gewichts-%, 15 Gewichts-% und 20 Gewichts-% hergestellt.

In den Kraft-Weg-Kurven der Figur 15 ist zu erkennen, dass die Handtrainer bei kleinem Verformungsweg ein leicht nicht-lineares Verhalten zeigen, wobei bei den Handtrainern mit Federelementen aus dem faserverstärkten Material die für eine bestimmte Verformung notwendige Kraft mit zunehmenden Fasergehalt stetig ansteigt.

### Bezugszeichenliste

- 1: Muskeltrainer
- 10: Federelement
- 11: erstes Federelement
- 12: zweites Federelement
- 13: Endbereich
- 14: Gelenkelement
- 16: Lasche
- 18: Walze
- 20: Wanddicke Mitte
- 22: Wanddicke Endbereich
- 24: Breite Endbereich
- 26: Breite Mitte
- 28: Länge
- 30: Vorsprung
- 32: Aussparung
- 34: Öffnung
- 36: Abrundung
- 38: Rippe
- 40: Nut
- 42: Kegelstumpf
- 44: Schnappelement
- 46: Rastelement
- 48: federnder Bogen
- 50: Krafteinleitungsbereich
- 52: Krafteinleitungselement

- 54: Abstandshalter

- 60: Stempel
- 62: Tisch
- 64: Verformungsweg
- 66: Abstand unbelastet
- 68: Abstand belastet

- F: Krafteinwirkung

## Patentansprüche

1. Muskeltrainer (1) mit einem ersten gekrümmten, länglichen Federelement (10, 11) und einem zweiten gekrümmten, länglichen Federelement (10, 12), wobei die beiden Federelemente (10, 11, 12) mit ihren konkaven Seiten einander zugewandt angeordnet sind, an ihren jeweiligen Endbereichen (13) Gelenkelemente (14) aufweisen und über aus den Gelenkelementen (14) gebildete Gelenke an ihren beiden Endbereichen (13) miteinander verbunden sind, **dadurch gekennzeichnet, dass** der Muskeltrainer (1) einstückig ausgeführt ist, wobei die beiden Federelemente (10, 11, 12) des einstückig ausgeführten Muskeltrainers (1) durch jeweils an den konvexen Seiten angeordnete federnde Bögen (48) miteinander verbunden sind, oder aus dem erstem Federelement (10, 11) und dem zweiten Federelement (10, 12) besteht und dass die Gelenkelemente (14) des ersten Federelements (11) als Laschen (16) ausgebildet sind, wobei die Laschen (16) in Richtung der konkaven Seite des ersten Federelements (11) gebogen sind und die Gelenkelemente (14) des zweiten Federelements (12) teilweise umschließen, wobei die Gelenkelemente (14) des zweiten Federelements (12) Walzen sind oder abgerundet ausgebildet sind und eine Lasche (16) jeweils ein Lager ausbildet, in dem das Gelenkelement (14) des zweiten Federelements (12) drehbar gelagert ist.

2. Muskeltrainer (1) gemäß Anspruch 1, **dadurch gekennzeichnet, dass** die Gelenkelemente (14) des ersten Federelements (11) als Schnappelemente (44) ausgebildet sind, die Gelenkelemente (14) des zweiten Federelements (12) als Rastelemente (46) ausgebildet sind und dass die Rastelemente (46) in den Schnappelementen (44) aufgenommen sind.

3. Muskeltrainer (1) gemäß Anspruch 1 oder 2, **dadurch gekennzeichnet, dass** jeweils ein Gelenkelement (14) des ersten Federelements (11) mit einem Gelenkelement (14) des zweiten Federelements (12) einen Formschluss ausbildet, der eine seitliche Bewegung des ersten Federelements (11) relativ zum zweiten Federelement (12) verhindert.

4. Muskeltrainer (1) gemäß Anspruch 3, **dadurch gekennzeichnet, dass** der Formschluss durch jeweils mindestens einen Vorsprung (30) an den Gelenkelementen (14) des zweiten Federelements (12) gebildet ist, der jeweils in eine korrespondierende Öffnung (34) oder in korrespondierende Aussparungen (32) an den Gelenkelementen (14) des ersten Federelements (11) eingreift.

5. Muskeltrainer (1) gemäß Anspruch 3, **dadurch gekennzeichnet, dass** der Formschluss durch eine Veränderung der Wanddicke der Federelemente (10) über deren Breite ausgebildet ist.

6. Muskeltrainer (1) gemäß Anspruch 5, **dadurch gekennzeichnet, dass** das erste Federelement (11) im Bereich seiner Gelenkelemente (14) jeweils eine Rippe (38) aufweist, die in eine entsprechende Nut (40) im Bereich der Gelenkelemente (14) des zweiten Federelements (12) eingreift.

7. Muskeltrainer (1) gemäß Anspruch 5, **dadurch gekennzeichnet, dass** die Wanddicke des ersten Federelements (11), über die Breite des ersten Federelements (11) gesehen, in der Mitte am Größten ist und sich zu den Seitenrändern hin verringert, und dass entsprechend die Wanddicke des zweiten Federelements (12), über die Breite des zweiten Federelements (12) gesehen, in der Mitte am geringsten ist und sich zu den Seitenrändern hin vergrößert.

8. Muskeltrainer (1) gemäß einem der Ansprüche 1 bis 7, **dadurch gekennzeichnet, dass** sowohl das erste Federelement als auch das zweite Federelement jeweils frei von Hinterschnitten ausgeführt sind.

9. Muskeltrainer (1) gemäß einem der Ansprüche 1 bis 8, **dadurch gekennzeichnet, dass** die beiden Federelemente (10, 11, 12) aus einem thermoplastischen Kunststoff gefertigt sind.

10. Muskeltrainer (1) gemäß Anspruch 9, **dadurch gekennzeichnet, dass** der thermoplastische Kunststoff ausgewählt ist aus Polyoxymethylen (POM), Polybutylenterephthalat (PBT), Polyamid (PA), Acrylnitril-Butadien-Styrol (ABS) und Polypropylen (PP).

11. Verfahren zur Herstellung eines Muskeltrainers (1) gemäß einem der Ansprüche 1 bis 10, umfassend die Schritte
a) Herstellen des ersten Federelements (11) und eines zweiten Federelements (12) mittels Spritzguss mit mindestens einer Spitzgussform,
b) Aufbiegen des ersten Federelements (11) durch Krafteinwirkung auf die beiden Endbereiche (13) des ersten Federelements (11) und/oder Krümmen des zweiten Federelements (12) durch Krafteinwirkung auf die beiden Endbereiche (13) des zweiten Federelements (12),
c) Einsetzen des zweiten Federelements (12) in das erste Federelement (11),
d) Beenden der Krafteinwirkung auf das erste Federelement (11) und/oder auf das zweite Federelement (12), wobei die Gelenkelemente (14) des ersten Federelements (11) und des zweiten Federelements (12) Gelenke ausbilden.

12. Verwendung des Muskeltrainers (1) gemäß einem der Ansprüche 1 bis 10, als Handtrainer.

## Claims

1. A muscle trainer (1) comprising a first curved, elongate spring element (10, 11) and a second curved, elongate spring element (10, 12), the two spring elements (10, 11, 12) being arranged with their concave sides facing each other, having joint elements (14) at their respective end areas (13) and being connected to each other at their two end areas (13) via joints formed from the joint elements (14), wherein the muscle trainer (1) is designed in one piece, the two spring elements (10, 11, 12) of the one-piece muscle trainer (1) being connected to each other by resilient arcs (48) arranged on each of the convex sides, or is composed of the first spring element (10, 11) and the second spring element (10, 12), and wherein the joint elements (14) of the first spring element (11) are designed as brackets (16), the brackets (16) being bent in the direction of the concave side of the first spring element (11) and partially enclosing the joint elements (14) of the second spring element (12), the joint elements (14) of the second spring element (12) being rollers or having a rounded configuration, and a bracket (16) in each case forming a bearing in which the joint element (14) of the second spring element (12) is mounted rotatably.

2. The muscle trainer (1) according to claim 1, wherein the joint elements (14) of the first spring element (11) are designed as snap-action elements (44), the joint elements (14) of the second spring element (12) are designed as latching elements (46), and wherein the latching elements (46) are received in the snap-action elements (44).

3. The muscle trainer (1) according to claim 1 or 2, wherein a respective joint element (14) of the first spring element (11) establishes a form-fit connection with a joint element (14) of the second spring element (12), which form-fit connection prevents a lateral movement of the first spring element (11) relative to the second spring element (12).

4. The muscle trainer (1) according to claim 3, wherein the form-fit connection is provided by in each case at least one projection (30) on the joint elements (14) of the second spring element (12), said projection (30) engaging in each case in a corresponding opening (34) or in corresponding recesses (32) on the joint elements (14) of the first spring element (11).

5. The muscle trainer (1) according to claim 3, wherein the form-fit connection is provided by a change in the wall thickness of the spring elements (10) across their width .

6. The muscle trainer (1) according to claim 5, wherein the first spring element (11) has, in the area of each of its joint elements (14), a rib (38) which engages in a corresponding groove (40) in the area of the joint elements (14) of the second spring element (12).

7. The muscle trainer (1) according to claim 5, wherein the wall thickness of the first spring element (11), seen across the width of the first spring element (11), is greatest at the center and decreases toward the side edges, and wherein the wall thickness of the second spring element (12), seen across the width of the second spring element (12), is accordingly at its smallest at the center and increases toward the side edges.

8. The muscle trainer (1) according to one of claims 1 to 7, wherein the first spring element and the second spring element are both free of undercuts.

9. The muscle trainer (1) according to one of claims 1 to 8, wherein the two spring elements (10, 11, 12) are produced from a thermoplastic.

10. The muscle trainer (1) according to claim 9, wherein the thermoplastic is chosen from polyoxymethylene (POM), polybutylene terephthalate (PBT), polyamide (PA), acrylonitrile-butadiene-styrene (ABS) and polypropylene (PP).

11. A method for producing a muscle trainer (1) according to one of claims 1 to 10, comprising the steps of
a) producing the first spring element (11) and a second spring element (12) by injection molding using at least one injection mold,
b) bending the first spring element (11) by applying force to the two end areas (13) of the first spring element (11) and/or curving the second spring element (12) by applying force to the two end areas (13) of the second spring element (12),
c) inserting the second spring element (12) into the first spring element (11),
d) terminating the force application onto the first spring element (11) and/or onto the second spring element (12), the joint elements (14) of the first spring element (11) and of the second spring element (12) forming joints.

12. The use of the muscle trainer (1) according to one of claims 1 to 10 as a hand trainer.

## Revendications

1. Dispositif d'entraînement musculaire (1) comprenant un premier élément de ressort courbe allongé (10, 11) et un deuxième élément de ressort courbe allongé (10, 12), les deux éléments de ressort (10, 11, 12) étant disposés avec leurs côtés concaves tournés l'un vers l'autre, présentant, au niveau de leur région d'extrémité respective (13), des éléments d'articulation (14) et étant connectés l'un à l'autre au niveau de leurs deux régions d'extrémité (13) par le biais d'articulations formées à partir des éléments d'articulation (14), **caractérisé en ce que** le dispositif d'entraînement musculaire (1) est réalisé d'une seule pièce, les deux éléments de ressort (10, 11, 12) du dispositif d'entraînement musculaire (1) réalisé d'une seule pièce étant connectés l'un à l'autre par des arcs élastiques (48) disposés à chaque fois au niveau des côtés convexes, ou se composant du premier élément de ressort (10, 11) et du deuxième élément de ressort (10, 12) et **en ce que** les éléments d'articulation (14) du premier élément de ressort (11) sont réalisés sous forme de pattes (16), les pattes (16) étant cintrées dans la direction du côté concave du premier élément de ressort (11) et entourant en partie les éléments d'articulation (14) du deuxième élément de ressort (12), les éléments d'articulation (14) du deuxième élément de ressort (12) étant des rouleaux ou étant réalisés sous forme arrondie et une patte (16) constituant à chaque fois un palier dans lequel l'élément d'articulation (14) du deuxième ressort (12) est supporté à rotation.

2. Dispositif d'entraînement musculaire (1) selon la revendication 1, **caractérisé en ce que** les éléments d'articulation (14) du premier élément de ressort (11) sont réalisés sous forme d'éléments d'enclenchement (44), les éléments d'articulation (14) du deuxième élément de ressort (12) sont réalisés sous forme d'éléments d'encliquetage (46) et **en ce que** les éléments d'encliquetage (46) sont reçus dans les éléments d'enclenchement (44).

3. Dispositif d'entraînement musculaire (1) selon la revendication 1 ou 2, **caractérisé en ce qu'**un élément d'articulation (14) du premier élément de ressort (11) constitue, à chaque fois avec un élément d'articulation (14) du deuxième élément de ressort (12), un engagement par correspondance de formes qui empêche un mouvement latéral du premier élément de ressort (11) par rapport au deuxième élément de ressort (12).

4. Dispositif d'entraînement musculaire (1) selon la revendication 3, **caractérisé en ce que** l'engagement par correspondance de formes est formé à chaque fois par au moins une saillie (30) au niveau des éléments d'articulation (14) du deuxième élément de ressort (12), laquelle s'engage à chaque fois dans une ouverture correspondante (34) ou dans des évidements correspondants (32) au niveau des éléments d'articulation (14) du premier élément de ressort (11).

5. Dispositif d'entraînement musculaire (1) selon la revendication 3, **caractérisé en ce que** l'engagement par correspondance de formes est formé par une variation de l'épaisseur de paroi des éléments de ressort (10) sur leur largeur.

6. Dispositif d'entraînement musculaire (1) selon la revendication 5, **caractérisé en ce que** le premier élément de ressort (11) présente, dans la région de ses éléments d'articulation (14), à chaque fois une nervure (38) qui s'engage dans une rainure correspondante (40) dans la région des éléments d'articulation (14) du deuxième élément de ressort (12).

7. Dispositif d'entraînement musculaire (1) selon la revendication 5, **caractérisé en ce que** l'épaisseur de paroi du premier élément de ressort (11), vu sur la largeur du premier élément de ressort (11), est maximale au niveau du centre et diminue vers les bords latéraux, et **en ce que**, de manière correspondante, l'épaisseur de paroi du deuxième élément de ressort (12), vu sur la largeur du deuxième élément de ressort (12), est la plus faible au centre et augmente vers les bords latéraux.

8. Dispositif d'entraînement musculaire (1) selon l'une quelconque des revendications 1 à 7, **caractérisé en ce qu'**à la fois le premier élément de ressort et le deuxième élément de ressort sont réalisés sans contre-dépouille.

9. Dispositif d'entraînement musculaire (1) selon l'une quelconque des revendications 1 à 8, **caractérisé en ce que** les deux éléments de ressort (10, 11, 12) sont fabriqués à partir d'un plastique thermoplastique.

10. Dispositif d'entraînement musculaire (1) selon la revendication 9, **caractérisé en ce que** le plastique thermoplastique est choisi parmi du polyoxyméthylène (POM), du polybutylène téréphtalate (PBT), du polyamide (PA), de l'acrylonitrile-butadiène-styrène (ABS) et du polypropylène (PP).

11. Procédé de fabrication d'un dispositif d'entraînement musculaire (1) selon l'une quelconque des revendications 1 à 10, comprenant les étapes suivantes :
a) fabrication du premier élément de ressort (11) et d'un deuxième élément de ressort (12) par moulage par injection avec au moins un moule de moulage par injection,
b) cintrage du premier élément de ressort (11) par application de force sur les deux régions d'extrémité (13) du premier élément de ressort (11) et/ou courbure du deuxième élément de ressort (12) par application de force sur les deux régions d'extrémité (13) du deuxième élément de ressort (12),
c) insertion du deuxième élément de ressort (12) dans le premier élément de ressort (11),
d) suppression de l'application de force sur le premier élément de ressort (11) et/ou sur le deuxième élément de ressort (12), les éléments d'articulation (14) du premier élément de ressort (11) et du deuxième élément de ressort (12) constituant des articulations.

12. Utilisation du dispositif d'entraînement musculaire (1) selon l'une quelconque des revendications 1 à 10, en tant que dispositif d'entraînement de la main.
